Europäisches Patentamt

European Patent Office

Office européen des brevets

(11) Publication number: **0 238 046 B1**

## EUROPEAN PATENT SPECIFICATION

(45) Date of publication of patent specification: **28.08.91**   (51) Int. Cl.⁵: **H04N 5/445**

(21) Application number: **87103864.2**

(22) Date of filing: **17.03.87**

(54) **Simultaneous display of unrelated signals.**

(30) Priority: **17.03.86 US 840105**

(43) Date of publication of application:
**23.09.87 Bulletin 87/39**

(45) Publication of the grant of the patent:
**28.08.91 Bulletin 91/35**

(84) Designated Contracting States:
**DE FR GB NL**

(56) References cited:
**DE-B- 1 049 907**
**US-A- 3 614 304**
**US-A- 3 938 003**
**US-A- 4 399 462**

(73) Proprietor: **TEKTRONIX, INC.**
**Tektronix Industrial Park D/S Y3-121 4900**
**S.W. Griffith Drive P.O. Box 500**
**Beaverton Oregon 97077(US)**

(72) Inventor: **Birkel, Steven J.**
**7247 S.W. 171st Drive**
**Aloha Oregon 97007(US)**
Inventor: **Hoffman, Gilbert A.**
**1752 S.W. Anthony**
**Aloha Oregon 97006(US)**

(74) Representative: **Baillie, Iain Cameron et al**
**c/o Ladas & Parry Isartorplatz 5**
**W-8000 München 2(DE)**

## Description

The present invention relates to signal displays, and more particularly to the simultaneous display of unrelated signals such as a television video signal and a stereo audio signal associated therewith.

In the television industry there are currently vectorscopes to display video signals and separate audio instruments to display the associated audio signal. These separate instruments are required since these two signals are processed in completely different ways. To display two signals simultaneously on an instrument the usual technique is to input the signals directly to a multiplexer at the front end of the instrument so that the signals are subjected to the same processing after the multiplexer and prior to display as in US-A-4399462 and DE-A 1049907. This technique is not possible where the processing for the two signals is required to be different. Therefore, what is desired is a technique for simultaneously displaying two signals which require different processing on a single display.

Accordingly, the present invention provides, generally speaking, a simultaneous display of unrelated signals on the same vectorscope by processing the signals independently of each other and combining them via a multiplexer just prior to display. The rate of switching of the multiplexer between the signals is controlled by a microprocessor and is selected to be a frequency which maintains a good display while avoiding beat frequencies with other frequencies in the environment in which the instrument is used.

According to this invention there is provided an apparatus for displaying a video chrominance signal and a stereo audio signal simultaneously on a television vectorscope comprising:

means for decoding the video chrominance signal into two components for input respectively to an X-input and a Y-input of the television vectorscope;

means for separating the stereo audio signal into two channels for input respectively to the X-input and the Y-input;

means for switching the X-input and the Y-input between the two components and the two channels; and

means for controlling the switching means in response to a selected display mode to display either the video chrominance signal or the stereo audio signal or both simultaneously on the television vectorscope, the controlling means for switching between the video chrominance signal and the stereo audio signal when the selected display mode is for both simultaneously at a rate which does not interfere with other frequencies related to the video chrominance signal or the stereo audio signal.

The objects, advantages and novel features of the present invention will be apparent from the following detailed description when read in conjunction with the appended claims and attached drawing.

Fig. 1 is a block diagram of a simultaneous display system according to the present invention.

Fig. 2 is a timing diagram for the system of Fig. 1.

Fig. 3 is an illustration of a display according to the present invention.

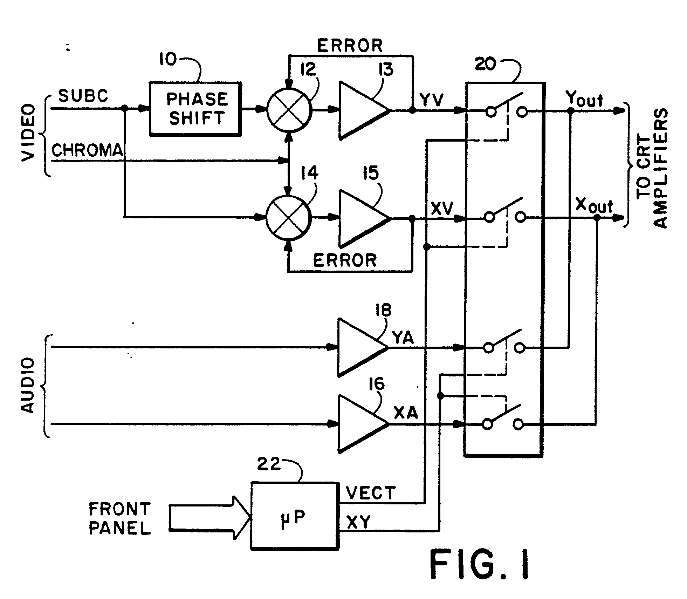

Referring to Fig. 1 a normal television signal is decoded into a subcarrier signal SUBC and a chrominance signal CHROMA. SUBC is input into a phase shifter 10 which shifts the phase by 90°. The phase shifted SUBC is input to a first demodulator 12, and the unshifted SUBC is input to a second demodulator 14. Also input to the demodulators 12 and 14 is CHROMA. The output of the demodulators 12 and 14 are input to respective error amplifiers 13 and 15, the outputs of which are the X and Y components of the input CHROMA, i.e., XV and YV. The outputs of the error amplifiers 13 and 15 are added back as error clamping voltages to the demodulated signals at the demodulators 12 and 14, respectively. This error signal serves to maintain the vector representation of the video signal at the center of the display so that both the video and audio representations are aligned properly, i.e., they share a common center dot. If independent positioning of the two representations is desired, the offset to these amplifiers 13 and 15 may be adjusted.

A stereo audio signal is separated into its left and right channels and amplified by respective amplifiers 16 and 18 to form XA and YA. The X and Y components of the video and the audio signals are input to a multiplexer 20. The outputs of the multiplexer 20 are an X component, XOUT, and a Y component, YOUT, of the selected input signal. The switching of the multiplexer 20 is controlled by signals from a microprocessor 22 which outputs a VECT signal to switch the video signal and an XY signal to switch the audio signal, depending upon the display mode selected by an operator at the front panel of the instrument. XOUT and YOUT from the multiplexer 20 are input to the deflection circuits of the display device and displayed as is well known in the art.

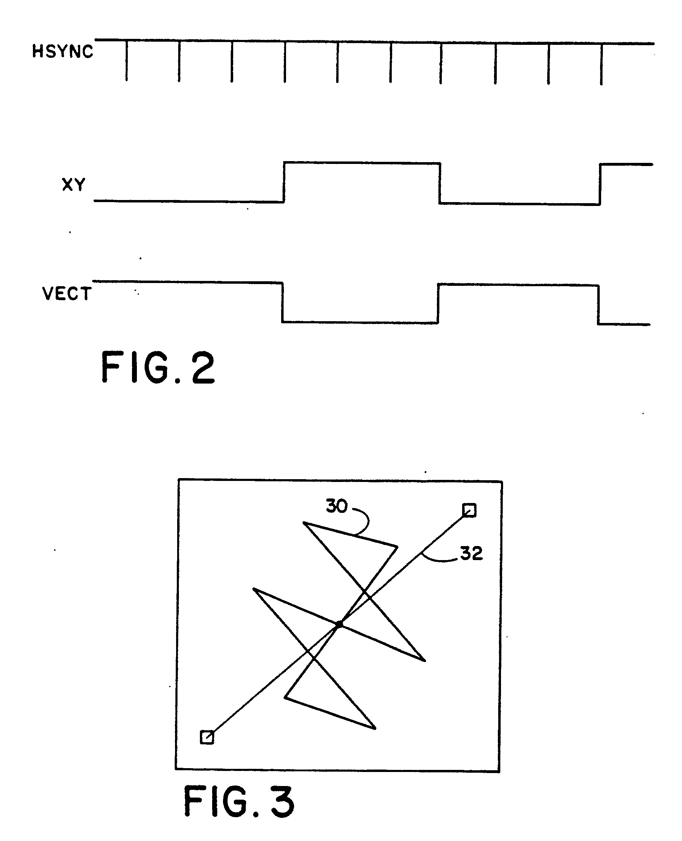

In operation the operator selects for display either the video signal, the audio signal or both video and audio signals simultaneously. If only one signal is selected for display, then the corresponding control signal, VECT or XY, is high while the other control signal is low so that the multiplexer 20 passes only that selected signal to the display X and Y deflection circuits. A simultaneous display of a video signal 30 and an audio signal 32 is shown in Fig. 3. Referring to Fig. 2 the rate of switching between the audio and video signals is unrelated to the line frequency of the video signal as represented by HSYNC as there is no correlation between the line sync and the audio timing. The video and audio signals are alternately switched at a rate which assures a good display while not interfering with any other signals in the environment in which the instrument is used. Such a rate as 300Hz may be used, which frequency is greater than the field rate of the video, but much less than the normal audio test tones of 1kHz or 2kHz used in a television studio.

Thus, the present invention provides for the simultaneous display of unrelated signals, such as television video and stereo audio signals, on a single display by processing the signals prior to multiplexing the signals at the deflection circuits of the display device.

## Claims

1. An apparatus for displaying a video chrominance signal and a stereo audio signal simultaneously on a television vectorscope comprising:

   means for decoding (10-15) the video chrominance signal into two components for input respectively to an X-input and a Y-input of the television vectorscope;

   means for separating (16, 18) the stereo audio signal into two channels for input respectively to the X-input and the Y-input;

   means for switching (20) the X-input and the Y-input between the two components and the two channels; and

   means for controlling (22) the switching means in response to a selected display mode to display either the video chrominance signal or the stereo audio signal or both simultaneously on the television vectorscope, the controlling means for switching between the video chrominance signal and the stereo audio signal when the selected display mode is for both simultaneously at a rate which does not interfere with other frequencies related to the video chrominance signal or the stereo audio signal.

2. An apparatus as recited in claim 1 wherein the switching means comprises a multiplexer (20) having as inputs the X and Y components for each signal from the decoding means (10-15) and the separating means (16, 18), and having as outputs the X and Y components for the processed signal selected by the controlling means (22).

3. An apparatus as recited in claim 2 wherein the controlling means comprises a microprocessor (22) having as an input the selected display mode, and having as an output a select signal to the multiplexer (20) in response to the selected display mode to switch the multiplexer (20) to pass the selected signal for display, the select signal switching the multiplexer at a rate dependent upon the selected display mode.

## Revendications

1. Dispositif pour afficher simultanément un signal de chrominance vidéo et un signal audio en stéréo dans un vecteurscope de télévision, comprenant:

   un moyen pour décoder (10-15) le signal de chrominance vidéo en deux composantes pour une entrée respectivement par une entrée X et une entrée Y du vecteurscope de télévision;

   un moyen pour séparer (16,18) le signal audio en stéréo en deux canaux pour une entrée respectivement par l'entrée X et l'entrée Y;

   un moyen pour commuter (20) l'entrée X et l'entrée Y entre les deux composantes et les deux canaux; et

   un moyen pour commander (22) le moyen commutateur en réponse à un mode d'affichage sélectionné afin d'afficher soit le signal de chrominance vidéo, soit le signal audio en stéréo, soit les deux simultanément dans le vecteurscope de télévision, le moyen de commande servant à une commutation entre le signal de chrominance vidéo et le signal audio en stéréo quand le mode d'affichage sélectionné est pour les deux simultanément à une fréquence qui n'interfère pas avec d'autres fréquences relatives au signal de chrominance vidéo ou au signal audio en stéréo.

2. Dispositif selon la revendication 1, dans lequel le moyen commutateur comprend un multiplexeur (20) comportant comme signaux d'entrée les composantes X et Y pour chaque signal provenant du moyen décodeur (10-15) et du moyen séparateur (16,18), et comportant comme signaux de sortie les composantes X et Y pour le signal traité qui est sélectionné par le moyen de commande (22).

3. Dispositif selon la revendication 2, dans lequel le moyen de commande comprend un microprocesseur (22) comportant en entrée le mode d'affichage sélectionné, et comportant comme signal de sortie un signal de sélection envoyé au multiplexeur (20) en réponse au mode d'affichage sélectionné pour commuter le multiplexeur (20) afin de laisser passer le signal sélectionné pour un affichage, le signal de sélection commutant le multiplexeur à une fréquence dépendant du mode d'affichage sélectionné.

darstellung gewählte Signal durchgeschaltet wird, wobei das Wählsignal den Multiplexer mit einer von der gewählten Sichtdarstellungsart abhängigen Frequenz umschaltet.

## Patentansprüche

1. Vorrichtung zum sichtbaren Darstellen eines Bildfarbart- und eines Stereotonsignals auf einem FernsehVektorskop, mit

einer Einrichtung (10 bis 15) zum Decodieren des Bildfarbartsignals zu zwei Komponenten zum Zuführen zu einem X-Eingang bzw. einem Y-Eingang des Fernseh-Vektorskops;

einer Einrichtung (16, 18) zum Trennen des Stereotonsignals in zwei Kanäle zum Zuführen zu dem X-Eingang bzw. dem Y-Eingang;

einer Einrichtung (20) zum Umschalten des X-Einganges und des Y-Einganges zwischen den beiden Komponenten und den beiden Kanälen und

einer Einrichtung (22) zur Steuerung der Schalteinrichtung in Abhängigkeit von einer gewählten Sichtdarstellungsart zur sichtbaren Darstellung entweder des Bildfarbartsignals oder des Stereotonsignals oder beider Signale gleichzeitig auf dem Fernseh-Vektorskop, wobei bei der Wahl jener Sichtdarstellungsart, bei der das Bildfarbartsignal und das Stereotonsignal gleichzeitig sichtbar dargestellt werden, die Steuereinrichtung ein Umschalten zwischen diesen beiden Signalen mit einer solchen Frequenz bewirkt, daß keine anderen Frequenzen gestört werden, die mit dem Bildfarbartsignal oder dem Stereotonsignal in Beziehung stehen.

2. Vorrichtung nach Anspruch 1, dadurch gekennzeichnet, daß die Umschalteinrichtung einen Multiplexer (20) besitzt, der eingangsseitig die von der Decodiereinrichtung (10 bis 15) und der Trenneinrichtung (16, 18) kommende X- und Y-Komponente jedes Signals empfängt und ausgangsseitig die von der Steuereinrichtung (22) gewählte X- und Y-Komponente des verarbeiteten Signals abgibt.

3. Vorrichtung nach Anspruch 2, dadurch gekennzeichnet, daß die Steuereinrichtung einen Mikroprozessor (22) besitzt, der eingangsseitig die gewählte Sichtdarstellungsart empfängt und ausgangsseitig in Abhängigkeit von der gewählten Sichtdarstellungsart an den Multiplexer (20) ein Wählsignal abgibt, das bewirkt, daß der Multiplexer (20) für das für die Sicht-

FIG. 1

HSYNC

XY

VECT

# FIG. 2

30
32

# FIG. 3